# EUROPEAN PATENT APPLICATION

(11) **EP 2 555 478 A1**
(43) Date of publication of application: **06.02.2013**
(21) Application number: 11761943.7
(22) Date of filing: 03.03.2011
(51) Int. Cl.: H04L 12/58

(54) **METHOD, SYSTEM, RESOURCE LIST SERVER AND PRESENCE SERVER FOR SUBSCRIBING PRESENCE INFORMATION**

(30) Priority: 29.03.2010 CN 201010135803
(71) Applicant: Huawei Technologies Co., Ltd., Shenzhen, Guangdong 518129 (CN)
(72) Inventor: LU, Jianfeng, Shenzhen Guangdong 518129 (CN); SHA, Jin, Shenzhen Guangdong 518129 (CN); YE, Chun, Shenzhen Guangdong 518129 (CN); YE, Chuanhu, Shenzhen Guangdong 518129 (CN)
(74) Representative: Aufhauser, Christoph
(86) International application number: PCT/CN2011/071480
(87) International publication number: WO 2011/120369

(57) **Abstract**

A method and a system for subscribing presence information, a resource list server, and a presence server are disclosed. The method for subscribing presence information includes: determining a presentity list of a first user, where the presentity list of the first user includes a second user (11); determining an existing subscription session that includes information of the second user, and sending a watcher list of the second user to a presence server (12); and receiving presence information returned by the presence server, where the presence information is presented by the second user to watchers in the watcher list of the second user (13). The resource list server converts the watcher's presentity list for different presentities into the presentity's watcher list for different watchers, and the presence information can be returned to different watchers through only one subscription session set up between the resource list server and the presence server for the same presentity, which reduces subscription sessions and saves system resources.

## Description

This application claims priority to Chinese Patent Application No. 201010135803.X, filed with the Chinese Patent Office on March 29, 2010 and entitled "METHOD AND SYSTEM FOR SUBSCRIBING PRESENCE INFORMATION, RESOURCE LIST SERVER, and PRESENCE SERVER", which is hereby incorporated by reference in its entirety.

### FIELD OF TECHNOLOGY

The present invention relates to the field of communication technologies, and in particular, to a method and a system for subscribing presence information, a resource list server, and a presence server.

### BACKGROUND OF THE INVENTION

Presence (presence) service is a communication service for discovering and collecting Presence Information (presence information). It presents and manages user presence information through a Presence Server (presence server). A presence service user may publish his/her presence information, subscribe presence information of other users, and notifies other users when the user's presence information changes. In this way, the user knows whether an opposite party is online, what the opposite party is doing (for example, busy, at a meeting or dining, and so on), and terminal capabilities of the opposite party.

Currently, the existing method for subscribing presence information includes: a Watcher (watcher) subscribes presence information of all presentities in a Presentity List (presentity list) from an RLS (Resource List Server, resource list server). For each Presentity in the Presentity List, the RLS sends a subscription request to the Presence Server respectively and sets up a subscription session with the presence server. Each Presentity notifies its presence information to the RLS respectively through the Presence Server, and the RLS gathers the presence information of each Presentity and returns the presence information to the Watcher.

In the process of developing the present invention, the inventor finds at least the following problems in the prior art:

Because the RLS maintains a large number of presentity lists, the subscription sessions accumulate in large numbers and consume too many system resources of the RLS and the presence server.

### SUMMARY OF THE INVENTION

Embodiments of the present invention provide a method and a system for subscribing presence information, a resource list server, and a presence server to reduce subscription sessions and save system resources.

A method for subscribing presence information in an embodiment of the present invention includes:

determining a presentity list of a first user, where the presentity list of the first user comprises a second user;

determining an existing subscription session that includes information of the second user, and sending a watcher list of the second user to a presence server; and

receiving presence information returned by the presence server, where the presence information is presented by the second user to watchers in the watcher list of the second user.

Correspondingly, a resource list server provided in an embodiment of the present invention includes:

a presentity list determining unit, configured to determine a presentity list of a first user, where the presentity list of the first user includes a second user;

a watcher list sending unit, configured to determine an existing subscription session that includes information of the second user, and send a watcher list of the second user to a presence server; and

a presence information receiving unit, configured to receive presence information returned by the presence server, where the presence information is presented by the second user to watchers in the watcher list of the second user.

Another method for subscribing presence information in an embodiment of the present invention includes:

receiving a user's watcher list sent by a resource list server, and subscribing the user's presence information for watchers in the user's watcher list;

using an existing subscription session that includes information of the second user to send presence information to the resource list server, where the presence information is presented by the user to the watchers in the user's watcher list.

Correspondingly, a presence server provided in an embodiment of the present invention includes:

a watcher list receiving unit, configured to receive a user's watcher list sent by a resource list server;

a subscribing unit, configured to subscribe the user's presence information for watchers in the user's watcher list; and

a presence information sending unit, configured to use an existing subscription session that includes information of the second user to send presence information to the resource list server, where the presence information is presented by the user to the watchers in the user's watcher list.

A system for subscribing presence information is provided in an embodiment of the present invention, and the system includes a resource list server and a presence server.

The resource list server is configured to: determine a presentity list of a first user, where the presentity list of the first user includes a second user; determine an existing subscription session that includes information of the second user, and send a watcher list of the second user to a presence server; and receive presence information returned by the presence server, where the presence information is presented by the second user to watchers in the watcher list of the second user.

The presence server is configured to: receive a second user's watcher list sent by the resource list server; subscribe the second user's presence information for watchers in the second user's watcher list; and use an existing subscription session that includes information of the second user to send presence information to the resource list server, where the presence information is presented by the second user to the watchers in the watcher list.

As revealed in the technical solution of embodiments of the present invention, the resource list server converts the watcher's presentity list for different presentities into the presentity's watcher list for different watchers, and the presence information can be returned to different watchers through only one subscription session set up between the resource list server and the presence server for the same presentity, which reduces subscription sessions and saves system resources.

### BRIEF DESCRIPTION OF THE DRAWINGS

To describe the technical solution of embodiments of the present invention more clearly, the following outlines the accompanying drawings used for describing the embodiments of the present invention. Apparently, the accompanying drawings outlined below are not exhaustive, and persons of ordinary skill in the art can derive other drawings from them without making any creative effort.

FIG. 1 is a flowchart of a method for subscribing presence information according to an embodiment of the present invention;

FIG. 2 is a flowchart of a method for subscribing presence information according to another embodiment of the present invention;

FIG. 3 is a schematic structural diagram of a resource list server according to an embodiment of the present invention;

FIG. 4 is a schematic structural diagram of another resource list server according to an embodiment of the present invention;

FIG. 5 is a flowchart of a method for subscribing presence information according to another embodiment of the present invention;

FIG. 6 is a schematic structural diagram of a presence server according to another embodiment of the present invention;

FIG. 7 is a schematic structural diagram of a system for subscribing presence information according to an embodiment of the present invention;

FIG. 8 is a schematic diagram of applying a method for subscribing presence information according to an embodiment of the present invention; and

FIG. 9 is a schematic diagram of applying a method for subscribing presence information according to another embodiment of the present invention.

### DETAILED DESCRIPTION OF THE EMBODIMENTS

The following detailed description is given in conjunction with the accompanying drawings to provide a thorough understanding of the technical solution of embodiments of the present invention. Evidently, the drawings and the detailed description are merely representative of particular embodiments of the present invention rather than all embodiments. All other embodiments, which can be derived by those skilled in the art from the embodiments given herein without making any creative effort, shall fall within the protection scope of the present invention.

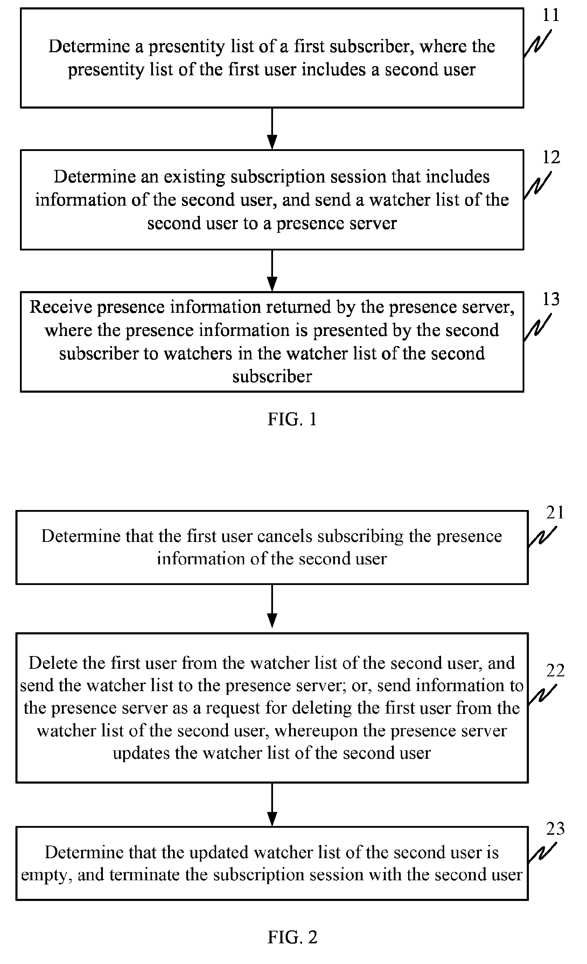

As shown in FIG. 1, a method for subscribing presence information in an embodiment of the present invention includes:

11. Determine a presentity list of a first user, where the presentity list of the first user includes a second user.

12. Determine an existing subscription session that includes information of the second user, and send a watcher list of the second user to a presence server; and

13. Receive presence information returned by the presence server, where the presence information is presented by the second user to watchers in the watcher list of the second user.

The entity for executing the method for subscribing presence information in this embodiment may be an RLS (Resource List Server, resource list server).

The first user is a watcher such as Watcher, and the second user is a presentity such as Presentity. The presentity list of the first user is a Presentity List, for example; the watcher list of the second user is a Watcher List, for example; the presence server is a Presence Server, for example.

Understandably, an RLS XDMS (RLS XML document management server) manages and maintains presentity lists of numerous watchers. For each watcher, if the watcher needs to subscribe a new presentity or delete an existing presentity in the presentity list. The watcher may notify the RLS XDMS of the information on the presentity to be added or deleted, and the RLS XDMS notifies the RLS of the information on the presentity that the watcher needs to add or delete, and therefore, the RLS updates the corresponding presence list of the watcher. The RLS interacts with the RLS XDMS through XCAP (XML Configuration Access Protocol) messages.

The RLS XDMS may be integrated with the RLS or stand-alone, which is not restricted.

Specifically, in step 11, the RLS receives a subscription request sent by a first user. The first user expects the RLS to subscribe, on behalf of the first user, presence information of all presentities in the presentity list of the first user.

The subscription request sent by the first user may carry an URI (Uniform Resource Identifier). The RLS searches the RLS XDMS according to the URI to obtain the presentity list of the first user. The presentity list of the first user may include the second user.

The subscription request sent by the first user may include an initial subscription request or a refresh subscription request. An initial subscription request is a subscription request sent by the first user initially. When the presence information of the presentity changes within the validity period of the subscription request, the presentity notifies the presence information to the first user proactively. Upon expiry of the validity period of the subscription request, the first user sends a refresh subscription request. In this way, within the validity period of the subscription request, the presentity whose presence information changes will notify the presence information to the first user proactively.

In step 12, the RLS determines an existing subscription session that includes information of the second user, and sends a watcher list of the second user to a presence server.

Because the presence information of the second user may be subscribed by other watchers in addition to the first user, it is possible that another watcher has subscribed the presence information of the second user, and that a subscription session already exists between the RLS and the presence server. Therefore, the RLS needs to judge whether the second user already has a subscription session between the RLS and the presence server. The subscription session between the watcher and the presentity is created through the RLS and the presence server, which is not detailed here any further.

The RLS determines that a subscription session that includes information of the second user is already set up between the RLS and the presence server, and therefore, no new subscription session needs to be set up for the second subscription, and the watcher list of the second user may be sent to the presence server directly through the subscription session already set up between the RLS and the presence server for the second user. Moreover, the RLS converts the presentity list of the watcher for different presentities into a watcher list of the presentity for different watchers. Through the subscription session already set up by the same presentity, the presence information is returned to different watchers.

Specifically, the RLS uses an XML Patch Operations message body of a SIP (Session Initiation Protocol, session initiation protocol) INFO message to carry the watcher list of the second user, or the RLS uses a Watcher List message body of a SIP SUBSCRIBE message to carry the watcher list of the second user, to the presence server.

Further, the presence server obtains the watcher list of the second user and, according to the rights granted by the second user to each watcher in the watcher list, returns to the RLS the presence information presented by the second user to each watcher, which is not detailed here any further.

In step 13: The RLS receives the presence information returned by the presence server, where the presence information is presented by the second user to the watchers in the watcher list of the second user.

By using the subscription session already set up between the RLS and the presence server for the second user, the RLS directly receives the presence information returned by the presence server and presented by the second user to watchers in the watcher list. The RLS gathers the presence information and distributes it to watchers of the second user. The watchers include the first user. Therefore, the first user may also obtain the presence information of the second user.

Also, the presence list of the first user may further include other presentities. For each presentity, steps 11-13 above may be performed and, therefore, the presence information can be returned to different watchers through only one subscription session set up for the same presentity.

As revealed in the technical solution of the above embodiment, the resource list server converts watcher's presentity list for different presentities into presentity's watcher list for different watchers, and the presence information can be returned to different watchers through only one subscription session set up between the resource list server and the presence server for the same presentity, which reduces subscription sessions and saves system resources.

If no subscription session that includes information of the second user is set up, the method for subscribing presence information in this embodiment of the present invention may further include:

determining that no subscription session that includes information of the second user is set up, setting up a subscription session that includes information of the second user with the presence server, and sending a watcher list of the second user to the presence server.

Therefore, if the RLS determines an existing subscription session that includes information of the second user between the RLS and the presence server, the RLS may send a subscription request to the presence server, requesting to set up a subscription session that includes information of the second user with the presence server, and the subscription request may carry a watcher list of the second user. For example, the RLS uses a Watcher List message body of a SUBSCRIBE message of SIP to carry the watcher list of the second user to the presence server.

Further, according to the rights granted by the second user to each watcher in the watcher list, the presence server returns to the RLS the presence information presented by the second user to each watcher. The subsequent step is the same as step 13, and is not repeated here any further.

Also, the presence list in the list subscription request of the first user may include other presentities. For each presentity, steps 11-13 above may be performed and , therefore, the presence information can be returned to different watchers through only one subscription session set up for the same presentity.

Specifically, in step 12, sending the watcher list of the second user to the presence server may include:

determining that no watcher list of the second user is set up, setting up a watcher list of the second user, and sending the watcher list to the presence server, where the watcher list of the second user includes the first user; or

determining that a watcher list of the second user is set up, adding the first user into the watcher list of the second user, and sending the watcher list to the presence server; or sending information to the presence server as a request for adding the first user into the watcher list of the second user, whereupon the presence server updates the watcher list of the second user.

That is, the RLS determines an existing subscription session that includes information of the second user between the RLS and the presence server, and then may further judge whether a watcher list of the second user is already set up.

If no watcher list of the second user is set up, the RLS may set up a watcher list of the second user, and send the watcher list to the presence server, where the watcher list of the second user includes the first user.

If a watcher list of the second user is set up, the RLS may add the first user into the watcher list of the second user, and send the watcher list to the presence server; or send information to the presence server as a request for adding the first user into the watcher list of the second user, whereupon the presence server updates the watcher list of the second user.

Specifically, the RLS may directly use the subscription session already set up between the RLS and the presence server for the second user, and use a Watcher List message body of a SIP SUBSCRIBE message to carry the watcher list of the second user to the presence server.

Alternatively, the RLS may directly use the subscription session already set up between the RLS and the presence server for the second user, and use a SIP XML Patch Operations message body of an INFO message to carry information to the presence server, where the information is a request for adding the first user into the watcher list of the second user, and then the presence server updates the watcher list of the second user.

The mode of the RLS judging an existing watcher list of the second user is also applicable to other watchers. For example, when a third user subscribes the presence information of the second user, because a subscription session that includes information of the second user is set up between the RLS and the presence server, the RLS may add the third user into the watcher list of the second user, and send the watcher list to the presence server; or the RLS may send information to the presence server as a request for adding the third user into the watcher list of the second user, whereupon the presence server updates the watcher list of the second user.

As shown in FIG. 2, when the first user cancels subscribing the presence information of the second user, the method for subscribing presence information in this embodiment of the present invention may further include:

21. Determine that the first user cancels subscribing the presence information of the second user.

22. Delete the first user from the watcher list of the second user, and send the watcher list to the presence server; or send information to the presence server as a request for deleting the first user from the watcher list of the second user, whereupon the presence server updates the watcher list of the second user.

23. Determine that the updated watcher list of the second user is empty, and terminate the subscription session with the second user.

Specifically, in step 21, the first user cancels subscribing the presence information of the second user, the first user sends information to the RLS XDMS as a request for deleting the second user, the RLS XDMS notifies the RLS of the information for deleting the second user, and the RLS knows that the first user cancels subscribing the presence information of the second user.

In step 22, the RLS deletes the first user from the watcher list of the second user, and updates the watcher list of the second user so that the watcher list excludes the first user. Besides, the RLS may directly use the subscription session already set up between the RLS and the presence server for the second user to send the updated watcher list of the second user to the presence server.

For example, the RLS uses a Watcher List message body of a SIP SUBSCRIBE message to carry the updated watcher list of the second user to the presence server.

Alternatively, by directly using the subscription session already set up between the RLS and the presence server for the second user, the RLS may send information to the presence server as a request for deleting the first user from the watcher list of the second user. Because the presence server also stores the watcher list of the second user, the presence server deletes the first user from the watcher list of the second user, and updates the watcher list of the second user so that the watcher list excludes the first user.

For example, the RLS uses an XML Patch Operations message body of a SIP INFO message to indicate that the first user cancels subscribing the presence information of the second user, and send the message body to the presence server. The presence server updates the watcher list of the second user.

Step 23: The RLS determines that the updated watcher list of the second user is empty and, therefore, knows that no watcher subscribes the presence information of the second user, and the RLS may terminate the subscription session with the second user.

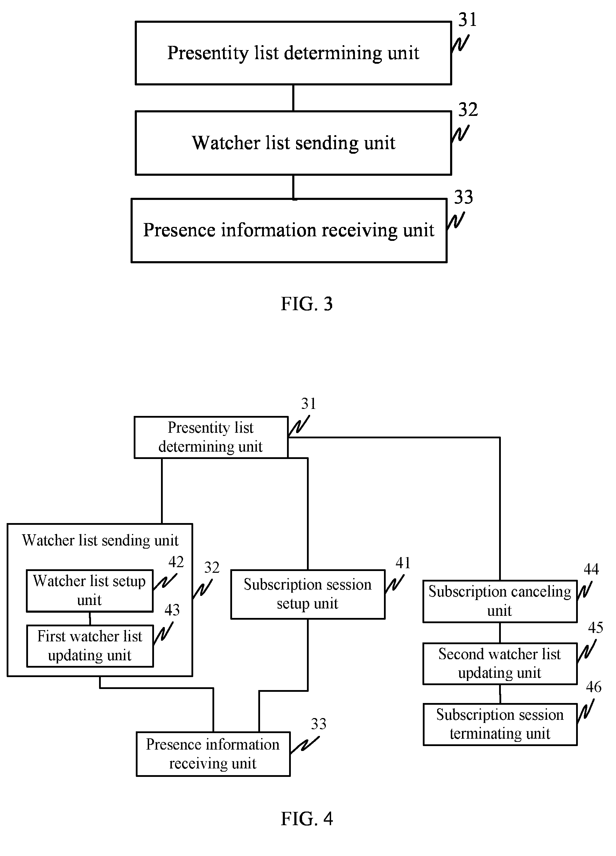

Corresponding to the method for subscribing presence information in the above embodiment, a resource list server is provided in an embodiment of the present invention. As shown in FIG. 3, the resource list server includes:

a presentity list determining unit 31, configured to determine a presentity list of a first user, where the presentity list of the first user includes a second user;

a watcher list sending unit 32, configured to determine an existing subscription session that includes information of the second user, and send a watcher list of the second user to a presence server; and

a presence information receiving unit 33, configured to receive presence information returned by the presence server, where the presence information is presented by the second user to watchers in the watcher list of the second user.

The resource list server in this embodiment of the present invention may be an RLS. The first user is a watcher, and the second user is a presentity. The presentity list of the first user is a Presentity List, for example; the watcher list of the second user is a Watcher List, for example; the presence server is a Presence Server, for example.

As revealed in the technical solution of the above embodiment, the resource list server converts the watcher's presentity list for different presentities into the presentity's watcher list for different watchers, and the presence information can be returned to different watchers through only one subscription session set up between the resource list server and the presence server for the same presentity, which reduces subscription sessions and saves system resources.

As shown in FIG. 4, the resource list server in this embodiment may further include:

a subscription session setup unit 41, configured to determine that no subscription session that includes information of the second user is set up, set up the subscription session that includes information of the second user with the presence server, and send the watcher list of the second user to the presence server.

Further, the watcher list sending unit 32 may include:

a watcher list setup unit 42, configured to determine that no watcher list of the second user is set up, set up the watcher list of the second user, and send the watcher list to the presence server, where the watcher list of the second user includes the first user; or

a first watcher list updating unit 43, configured to determine that a watcher list of the second user is set up, add the first user into the watcher list of the second user, and send the watcher list to the presence server; or send information to the presence server as a request for adding the first user into the watcher list of the second user, whereupon the presence server updates the watcher list of the second user.

The resource list server in this embodiment may further include:

a subscription canceling unit 44, configured to determine that the first user cancels subscribing the presence information of the second user;

a second watcher list updating unit 45, configured to delete the first user from the watcher list of the second user, and send the watcher list to the presence server; or send information to the presence server as a request for deleting the first user from the watcher list of the second user, whereupon the presence server updates the watcher list of the second user; and

a subscription session terminating unit 46, configured to determine that the updated watcher list of the second user is empty, and terminate the subscription session with the second user.

Specifically, the first watcher list updating unit 43 may use a Watcher List message body of a SIP SUBSCRIBE message to carry the updated watcher list of the second user to the presence server; or, through an XML Patch Operations message body of a SIP INFO message, add the first user into the watcher list of the second user and send the watcher list to the presence server, whereupon the presence server updates the watcher list of the second user.

The second watcher list updating unit 45 may use a Watcher List message body of a SIP SUBSCRIBE message to carry the updated watcher list of the second user to the presence server; or, through an XML Patch Operations message body of a SIP INFO message, send information to the presence server as a request for deleting the first user from the watcher list of the second user, whereupon the presence server updates the watcher list of the second user.

The resource list server in this embodiment and the composition thereof can be understood according to the method for subscribing presence information in the foregoing embodiments, and are not repeated here any further.

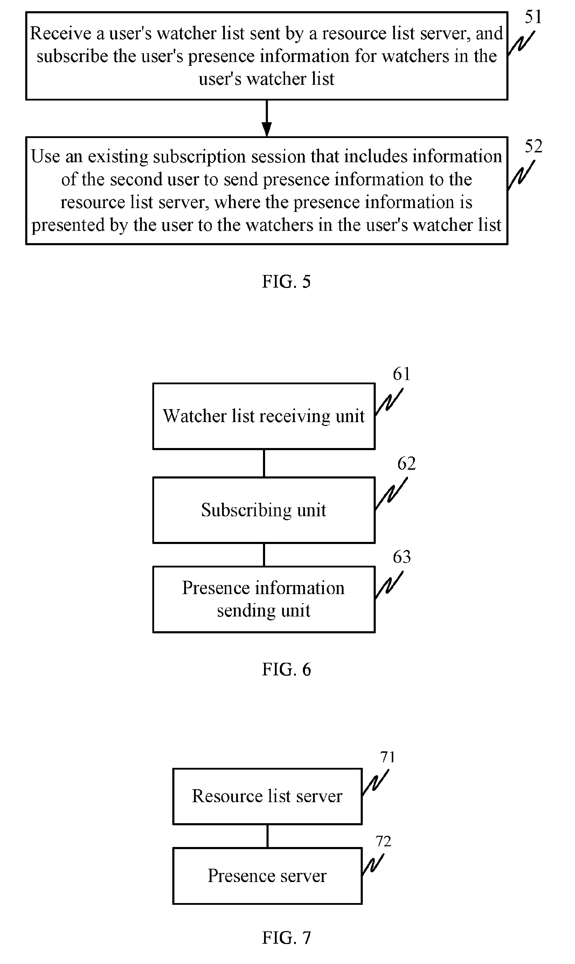

As shown in FIG. 5, corresponding to the method for subscribing presence information in the foregoing embodiments, this embodiment provides a method for subscribing presence information. The method in this embodiment includes:

51. Receive a user's watcher list sent by a resource list server, and subscribe the user's presence information for watchers in the user's watcher list.

52. Use an existing subscription session that includes information of the second user to send presence information to the resource list server, where the presence information is presented by the user to the watchers in the user's watcher list.

The entity for executing the method for subscribing presence information in this embodiment may be a presence server. The resource list server is an RLS, for example.

As revealed in the technical solution of the above embodiments of the present invention, the resource list server converts the watcher's presentity list for different presentities into the presentity's watcher list for different watchers, and the presence information can be returned to different watchers through only one subscription session set up between the resource list server and the presence server for the same presentity, which reduces subscription sessions and saves system resources.

When the resource list server updates the watcher list of the second user, the method for subscribing presence information in this embodiment of the present invention may further include:

receiving an updated watcher list of a user from the resource list server.

Alternatively, when the RLS instructs the presence server to add or delete user information, the method for subscribing presence information in this embodiment of the present invention may further include:

receiving information sent by the resource list server as a request for adding or deleting the user information, and updating the watcher list of the user according to the information for adding or deleting the subscription information.

The method for subscribing presence information in this embodiment can be understood according to the method for subscribing presence information in the foregoing embodiments.

Corresponding to the method for subscribing presence information in the above embodiment, a presence server is provided in an embodiment of the present invention. As shown in FIG. 6, the presence server includes:

a watcher list receiving unit 61, configured to receive a user's watcher list sent by a resource list server;

a subscribing unit 62, configured to subscribe the user's presence information for watchers in the user's watcher list; and

a presence information sending unit 63, configured to use an existing subscription session that includes information of the second user to send presence information to the resource list server, where the presence information is presented by the user to the watchers in the user's watcher list.

As revealed in the technical solution of this embodiment, the resource list server converts the watcher's presentity list for different presentities into the presentity's watcher list for different watchers, and the presence information can be returned to different watchers through only one subscription session set up between the resource list server and the presence server for the same presentity, which reduces subscription sessions and saves system resources.

When the resource list server updates the watcher list of the second user, the presence server in this embodiment of the present invention may further include:

a receiving unit, configured to receive an updated watcher list of a user from the resource list server;

Alternatively, when the RLS instructs the presence server to add or delete user information, the presence server in this embodiment of the present invention may further include:

a watcher list updating unit, configured to receive information sent by the resource list server as a request for adding or deleting the user information, and update the watcher list of the user according to the information for adding or deleting the subscription information.

The presence server in this embodiment can be understood according to the method for subscribing presence information in the foregoing embodiment, and is not detailed here any further.

As shown in FIG. 7, a system for subscribing presence information is provided in an embodiment of the present invention. The system includes a resource list server 71 and a presence server 72.

The resource list server 71 is configured to: determine a presentity list of a first user, where the presentity list of the first user includes a second user; determine an existing subscription session that includes information of the second user, and send a watcher list of the second user to the presence server 72; and receive presence information returned by the presence server 72, where the presence information is presented by the second user to watchers in the watcher list of the second user.

The presence server 72 is configured to: receive the second user's watcher list sent by the resource list server 71; subscribe the second user's presence information for watchers in the second user's watcher list; and use the existing subscription session that includes information of the second user to send presence information to the resource list server 71, where the presence information is presented by the second user to the watchers in the watcher list.

As revealed in the technical solution of this embodiment, the resource list server converts the watcher's presentity list for different presentities into the presentity's watcher list for different watchers, and the presence information can be returned to different watchers through only one subscription session set up between the resource list server and the presence server for the same presentity, which reduces subscription sessions and saves system resources.

Embodiment 1

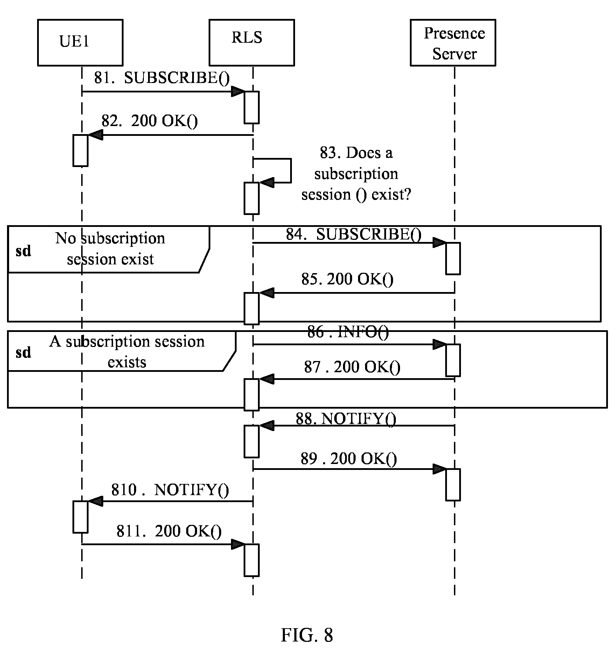

As shown in FIG. 8, supposing that UE1 subscribes the presence information of UE2 (not illustrated in the figure), the following describes the method for subscribing presence information in this embodiment:

81. UE1 subscribes the presence information by sending a SUBSCRIBE message to the RLS.

Specifically, UE1 is a terminal of a watcher, and the SUBSCRIBE message includes an URI. According to the URI, the RLS searches the RLS XDMS to obtain the presentity list of UE1. The presentity list of UE1 includes UE2, where UE2 is a terminal of a presentity.

A watcher may subscribe the presence information of one or more presentities. Therefore, the presentity list of the watcher may include one or more presentities.

When the presentity list includes more than one presentity, the RLS needs to obtain the presence information of each presentity from the presence server, respectively. To obtain the presence information of one presentity from the presence server, the RLS needs to have one subscription session with the presence server, where the subscription session is dependent of the presentity.

82. The RLS receives the foregoing SUBSCRIBE message, and returns a 200 OK response to UE1.

83. The RLS judges whether a subscription session that includes information of UE2 exists between the RLS and the presence server.

Specifically, if a subscription session that includes information of UE2 already exists between the RLS and the presence server, go to step 86; otherwise, go to step 84.

Because one presentity may be subscribed by more than one watcher, it is possible that another watcher has subscribed the presence information of the presentity, and that a subscription session already exists between the RLS and the presence server. Therefore, the RLS needs to judge whether the presentity in the presentity list already has the subscription session between the RLS and the presence server.

84. If no subscription session that includes information of UE2 exists between the RLS and the presence server, the RLS sends a SUBSCRIBE message to the presence server to set up a subscription session, where the SUBSCRIBE message carries a watcher list of UE2.

Because a presentity may be subscribed by more than one watcher, the RLS may obtain a watcher list of the presentity. The watcher list of the presentity includes one or more watchers. In this way, the watcher's presentity list centered on the watcher is converted into the presentity's watcher list centered on the presentity.

A reason why the watcher list of UE2 is notified to the presence server is: the same presentity may grant different rights to each watcher, and the presence information obtained by one watcher from a presentity may be different from the presence information obtained by another watcher from the same presentity. For example, the right granted by UE2 to watcher B is to obtain the detailed location information and online state information of UE2, but the right granted by UE2 to watcher C is to obtain the online state information of UE2 without the detailed location information. Therefore, the RLS notifies the watcher list of the presentity to the presence server, and the presentity server obtains the presence information of the presentity according to the rights granted by the presentity to each watcher.

85. The presence server returns a 200 OK message to the RLS, and the RLS sets up a subscription session with the presence server successfully. Go to step 58.

86. If a subscription session that includes information of UE2 already exists between the RLS and the presence server, the RLS sends the watcher list of UE2 to the presence server.

Specifically, because one presentity may be subscribed by more than one watcher, it is possible that another watcher has subscribed the presence information of the presentity, and that the RLS has set up a watcher list of the presentity. Therefore, after determining an existing subscription session that includes information of UE2 between the RLS and the presence server, the RLS may further judge whether a watcher list of UE2 is already set up.

If the RLS has not set up a watcher list of UE2, the RLS sets up a watcher list of UE2, and sends the watcher list to the presence server, where the watcher list of UE2 includes UE1.

If the RLS already sets up a watcher list of UE2, the RLS adds UE1 into the watcher list of UE2, and sends the watcher list to the presence server. Alternatively, the RLS sends information to the presence server as a request for adding UE1 into the watcher list of UE2, and the presence server updates the watcher list of UE2.

Specifically, the RLS uses a Watcher List message body of a SUBSCRIBE message to carry the watcher list of UE2 to the presence server.

Alternatively, the RLS may use an XML Patch Operations message body of an INFO message to carry information to the presence server as a request for adding UE1 into the watcher list of UE2.

87. The presence server returns a 200 OK message to the RLS.

88. The presence server sends a NOTIFY message to the RLS, where the NOTIFY message carries the presence information of UE2.

The presence information of UE2 includes presence information presented by UE2 to every watcher in the watcher list. For example, the presence information of UE2 includes the presence information presented to watcher B (location information and state information), and presence information presented to watcher C (state information only).

89. The RLS returns a 200 OK message to the presence server, indicating that the RLS receives the presence information sent by the presence server successfully.

810. The RLS sends a NOTIFY message to UE1, where the NOTIFY message carries the presence information relative to the presentity of UE1.

811. UE1 returns a 200 OK message to the RLS.

As revealed in the technical solution of this embodiment, the resource list server converts the watcher's presentity list for different presentities into the presentity's watcher list for different watchers, and the presence information can be returned to different watchers through only one subscription session set up between the resource list server and the presence server for the same presentity, which reduces subscription sessions and saves system resources.

Embodiment 2

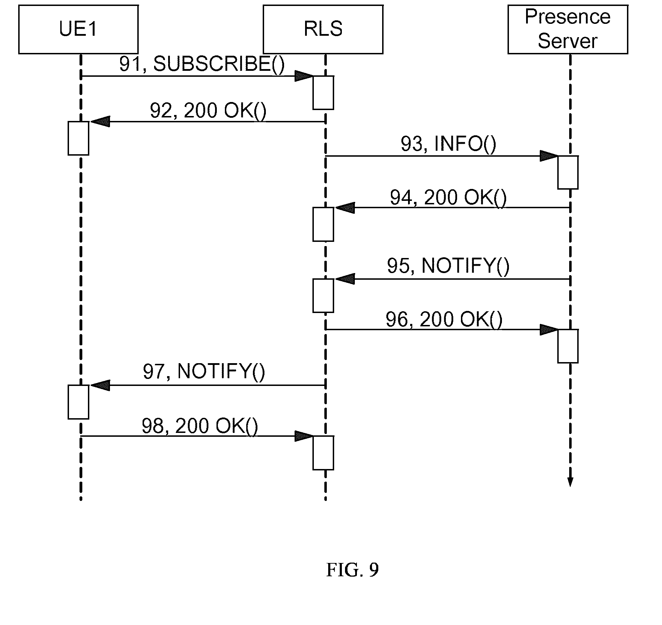

As shown in FIG. 9, supposing that UE1 cancels subscribing the presence information of UE2, the following describes the method for subscribing presence information in this embodiment:

91. UE1 subscribes the presence information by sending a SUBSCRIBE message to the RLS.

The SUBSCRIBE message carries a subscription identifier of UE1. According to the subscription identifier of UE1, the RLS searches the presentity list in the RLS XDMS. Because UE1 has cancelled subscription for UE2, the RLS finds no UE2 in the presentity list of UE1.

92. The RLS returns a 200 OK message to UE1.

93. The RLS determines that a subscription session that includes information of UE2 already exists between the RLS and the presence server, and sends an XML Patch Operations message body of an INFO message to the presence server. The XML Patch Operations message body of the INFO message carries information indicating that UE1 cancels subscription for UE2.

Optionally, the RLS may delete UE1 from the watcher list of UE2. The RLS uses a Watcher List message body of a SUBSCRIBE message to carry the updated watcher list of UE2 to the presence server.

94. The presence server returns a 200 OK message to the RLS. At this time, the watcher list of UE2 does not include UE1 any more.

95. The presence server sends a NOTIFY message to the RLS, where the NOTIFY message carries the presence information of UE2. The presence information of UE2 does not include the presence information for UE1 any more.

96. The RLS returns a 200 OK message.

At this time, the RLS may send a NOTIFY message that includes information of the presence information to each watcher of the presentity.

As revealed in the technical solution provided in the above embodiment, a method for optimizing control on subscription sessions between the RLS and the presence server is provided. By letting the message body carry the watcher list related to the presentity, the RLS and the presence server combine different watchers' subscriptions for the presence information of the same presentity, thereby reducing the subscription sessions and saving system resources.

Understandably, for ease of description in the method embodiments above, the method is described as a series of operations, and those skilled in the art are aware that the order of operations described herein shall not be construed as limitation on the present invention because certain steps may occur in different order or occur simultaneously according to the embodiments of the present invention. Meanwhile, those skilled in the art are aware that the embodiments described the specification are preferred embodiments, and the involved operations and modules are not necessarily mandatory to the present invention.

In the foregoing embodiments, each embodiment emphasizes a specific aspect, and the part not detailed in one embodiment may be detailed in another embodiment.

Persons of ordinary skill in the art understand that all or part of the steps of the method provided in the embodiments above may be implemented by a program instructing relevant hardware. The program may be stored in a computer readable storage medium. When the program runs, the program executes the steps of the method specified in any embodiment above. The storage medium may be a magnetic disk, CD-ROM, read-only memory (ROM) or random access memory (RAM).

The above descriptions are merely preferred embodiments of the present invention, but not intended to limit the protection scope of the present invention. Any modifications, variations or replacement that can be easily derived by those skilled in the art shall fall within the protection scope of the present invention. Therefore, the protection scope of the present invention is subject to the appended claims.

## Claims

1. A method for subscribing presence information, comprising:
determining a presentity list of a first user, wherein the presentity list of the first user comprises a second user;
determining an existing subscription session that includes information of the second user, and sending a watcher list of the second user to a presence server; and
receiving presence information returned by the presence server, wherein the presence information is presented by the second subscriber to watchers in the watcher list of the second user.

2. The method according to claim 1, further comprising:
determining that no subscription session that includes information of the second user is set up, setting up the subscription session that includes information of the second user with the presence server, and sending the watcher list of the second user to the presence server.

3. The method according to claim 1 or claim 2, wherein sending the watcher list of the second user to the presence server comprises:
determining that no watcher list of the second user exists, setting up the watcher list of the second user, and sending the watcher list to the presence server, wherein the watcher list of the second user comprises the first user; or
determining that the watcher list of the second user exists, adding the first user into the watcher list of the second user, and sending the watcher list to the presence server; or sending information to the presence server as a request for adding the first user into the watcher list of the second user, whereupon the presence server updates the watcher list of the second user.

4. The method according to claim 3, further comprising:
determining that the first user cancels subscribing the presence information of the second user;
deleting the first user from the watcher list of the second user, and sending the watcher list to the presence server; or sending information to the presence server as a request for deleting the first user from the watcher list of the second user, whereupon the presence server updates the watcher list of the second user; and
determining that the updated watcher list of the second user is empty, and terminating the subscription session with the second user.

5. A resource list server, comprising:
a presentity list determining unit, configured to determine a presentity list of a first user, wherein the presentity list of the first user comprises a second user;
a watcher list sending unit, configured to determine an existing subscription session that comprises the second user, and send a watcher list of the second user to a presence server; and
a presence information receiving unit, configured to receive presence information returned by the presence server, wherein the presence information is presented by the second user to watchers in the watcher list of the second user.

6. The resource list server according to claim 5, further comprising:
a subscription session setup unit, configured to determine that no subscription session that includes information of the second user is set up, set up the subscription session that includes information of the second user with the presence server, and send the watcher list of the second user to the presence server.

7. The resource list server according to claim 5 or claim 6, wherein the watcher list sending unit comprises:
a watcher list setup unit, configured to determine that no watcher list of the second user exists, set up the watcher list of the second user, and send the watcher list to the presence server, wherein the watcher list of the second user comprises the first user; or
a first watcher list updating unit, configured to determine that the watcher list of the second user exists, add the first user into the watcher list of the second user, and send the watcher list to the presence server; or send information to the presence server as a request for adding the first user into the watcher list of the second user, whereupon the presence server updates the watcher list of the second user.

8. The resource list server according to claim 7, further comprising:
a subscription canceling unit, configured to determine that the first user cancels subscribing the presence information of the second user;
a second watcher list updating unit, configured to delete the first user from the watcher list of the second user, and send the watcher list to the presence server; or send information to the presence server as a request for deleting the first user from the watcher list of the second user, whereupon the presence server updates the watcher list of the second user; and
a subscription session terminating unit, configured to determine that the updated watcher list of the second user is empty, and terminate the subscription session with the second user.

9. A method for subscribing presence information, comprising:
receiving a user's watcher list sent by a resource list server, and subscribing the user's presence information for watchers in the user's watcher list; and
using an existing subscription session that includes information of the second user to send presence information to the resource list server, wherein the presence information is presented by the user to the watchers in the user's watcher list.

10. The method according to claim 9, further comprising:
receiving an updated watcher list of a user from the resource list server.

11. The method according to claim 9, further comprising:
receiving information sent by the resource list server as a request for adding or deleting the user information, and updating the user's watcher list of the user according to the information for adding or deleting the subscription information.

12. A presence server, comprising:
a watcher list receiving unit, configured to receive a user's watcher list sent by a resource list server;
a subscribing unit, configured to subscribe the user's presence information for watchers in the user's watcher list; and
a presence information sending unit, configured to use an existing subscription session that includes information of the second user to send presence information to the resource list server, wherein the presence information is presented by the user to the watchers in the user's watcher list.

13. The presence server according to claim 12, further comprising:
a receiving unit, configured to receive an updated watcher list of the user from the resource list server.

14. The presence server according to claim 12, further comprising:
a watcher list updating unit, configured to receive information sent by the resource list server as a request for adding or deleting the user information, and update the watcher list of the user according to the information for adding or deleting the subscription information.

15. A system for subscribing presence information, comprising a resource list server and a presence server, wherein:
the resource list server is configured to: determine a presentity list of a first user, wherein the presentity list of the first user comprises a second user; determine an existing subscription session that includes information of the second user, and send a watcher list of the second user to the presence server; and receive presence information returned by the presence server, wherein the presence information is presented by the second user to watchers in the watcher list of the second user; and
the presence server is configured to: receive the second user's watcher list sent by the resource list server; subscribe the second user's presence information for watchers in the second user's watcher list; and use the existing subscription session that includes information of the second user to send presence information to the resource list server, wherein the presence information is presented by the second user to the watchers in the watcher list.
